# EUROPEAN PATENT SPECIFICATION

(11) **EP 1 290 317 B1**
(45) Date of publication and mention of the grant of the patent: **17.05.2006**
(21) Application number: 01944007.2
(22) Date of filing: 07.06.2001
(51) Int. Cl.: F01N 3/023

(54) **REGENERATION OF A FILTER BY THE USE OF A TONE GENERATOR**
FILTERREGENERATION MITTELS EINES SCHALLGENERATORS
REGENERATION D'UN FILTRE AU MOYEN D'UN GENERATEUR AUDIO

(30) Priority: 09.06.2000 SE 0002186
(43) Date of publication of application: 12.03.2003
(73) Proprietor: VOLVO LASTVAGNAR AB, 405 08 Göteborg (SE)
(72) Inventor: MEGAS, Lucas, S-416 74 Göteborg (SE); DREWSEN, Astrid, S-426 71 Västra Frölunda (SE)
(74) Representative: Hammond, Andrew David
(86) International application number: PCT/SE2001/001273
(87) International publication number: WO 2001/094758

(56) References cited:
- SE-B- 463 529
- US-A- 4 615 173
- US-A- 4 875 335
- DATABASE WPI Week 199637, Derwent Publications Ltd., London, GB; AN 1996-369363, XP002905576 & JP 8 177 462 A (HINO MOTORS LTD ET AL.) 09 July 1996 & PATENT ABSTRACTS OF JAPAN & JP 08 177 462 A (NGK INSULATORS LTD ET AL.)

## Description

### Technical field

The present invention relates to an combustion engine comprising an exhaust pipe and a particle filter located in said exhaust pipe in accordance with the preamble of claim 1. Particularly, the invention relates to a combustion engine comprising an exhaust pipe, a particle filter located in said exhaust pipe, and means for cleaning said filter. Furthermore, the patent application relates to a method for cleaning a particle filter located in an exhaust pipe associated with a combustion engine.

### Background of the invention

Today's vehicle industry strives to utilise combustion engines with higher and higher demands for purity of the emissions produced by combustion processes taking place inside the combustion engines. Particularly where combustion processes in diesel engines are concerned, soot and ash particles are one type of such emissions. In order to reduce the occurrence of soot and ash particles in the exhaust gases which are finally emitted into the ambient environment, particle filters are installed in the exhaust pipe. The particle filters are constituted of mechanical filters and, in principle, function as a screen which allows passage of certain exhaust gas components, such as e.g. carbon dioxide and water, but prevents passage of soot particles and ash particles. This means that the soot particles and the ash particles will gradually form a deposit on the filter, which makes passage of the exhaust gases more difficult and results in an increase of the back pressure, and thereby also an increase of the fuel consumption of the vehicle. Should the process be allowed to proceed, the particle quantity finally becomes so large that the engine becomes useless. A traditional method for ensuring that the back pressure remains at an acceptable level is constituted by replacing the filter at regular intervals. In a combustion engine having a cylinder volume of 7 litres, approx. 1 litre of particles is produced during 70000 km of driving when operating on normal fuels. This means that filter replacement has to take place at relatively frequent intervals, something which might be perceived as awkward since it its desirable that the vehicle service intervals are not too frequent.

Therefore, in order to increase the service life of the filter, it is desirable that the filter be cleaned in some way without having to dismantle the filter from the exhaust pipe. In this connection, trials have been performed with catalytic filters which are intended to perform catalytic combustion of the soot particles. This type of process, however, does not remove the ash deposit from the filter surface. Furthermore, as a result of the heat generated in the catalytic combustion process, there is a risk that the ash forms a cement on the filter surface.

JP-A- 08 177 462 (fig. 6) discloses the features according to the first part of claim 1 and claim 9.

### Summary of the invention

An object of the invention is to provide a combustion engine comprising an exhaust pipe and a particle filter located in said exhaust pipe, wherein cleaning of the particle filter from soot and ash particles is possible without having to remove the filter from the exhaust pipe. This object is achieved by means of a combustion engine according to claim 1. By means of connecting a tone generator to said exhaust pipe, a means for cleaning the particle filter by means of an oscillating air stream generated by the tone generator is obtained. The oscillating air stream releases soot and ash particles from said filter which subsequently can be transported away from the filter.

A second object of the invention is to provide a method for cleaning a particle filter located in an exhaust pipe associated with a combustion engine. This object is achieved by means of a method according to claim 9. As a result of the tone generator generating an oscillating air stream, soot and ash particles are released from said filter by an infrasonic sound, and can be transported away from the filter.

### Brief description of the drawings

In the following, the invention will be described in greater detail by means of an embodiment, and with reference to the attached drawings, in which
- Fig. 1: is a schematic representation of a combustion engine comprising an exhaust pipe and a filter located in said exhaust pipe,
- Fig. 2: shows a detail of the design of a membrane present in the particle filter,
- Fig. 3: shows an embodiment of the invention where the switching-on of the tone generator takes place based on of information concerning the pressure drop across the filter.

### Detailed description of preferred embodiments

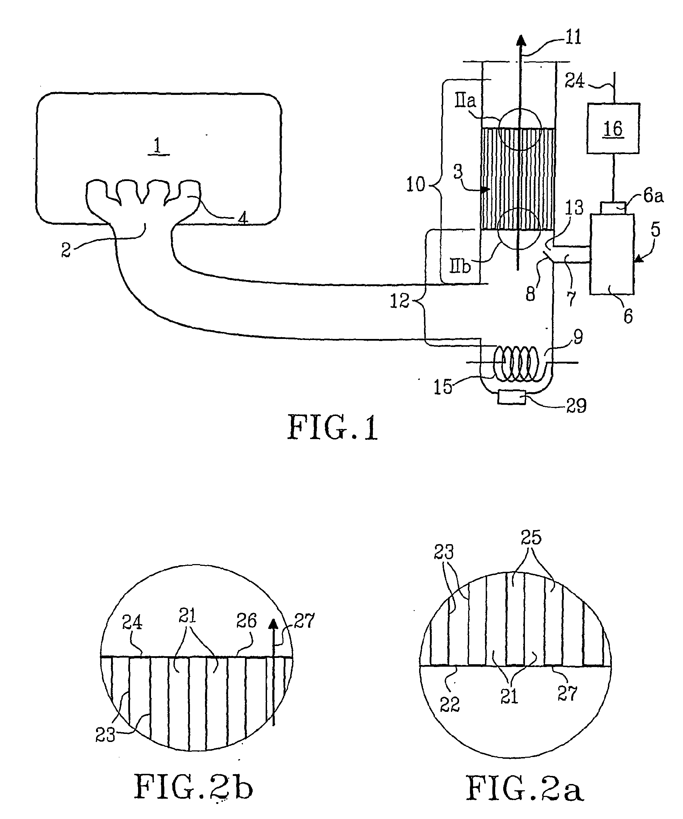

Fig. 1 is a schematic representation of a combustion engine 1 comprising an exhaust pipe 2 and a particle filter 3 located in said exhaust pipe. The combustion engine itself is of a previously known type, and will therefore not be described in any greater detail. Whenever applicable, the exhaust pipe comprises an exhaust manifold 4 which connects the outlets from the respective cylinders (not shown) in the combustion engine 1. The exhaust pipe 2 itself is of a conventional type and, whenever apllicable, can be equipped with one or several exhaust gas turbines (not shown) for operating one or several compressors (not shown) located in the inlet port (not shown) of the combustion engine. Furthermore, whenever applicable, catalytic reaction chambers (not shown) can be placed in the exhaust pipe.

A tone generator 5 is installed in connection with the exhaust pipe 2. The tone generator 5, which is of a type well known to the skilled person, generates an oscillating air stream having a low frequency which is guided into the exhaust pipe, preferably in a direction towards the filter. In a preferred embodiment, as shown in Fig. 1, the tone generator 5 comprises a loudspeaker 6a which communicates with a resonance chamber 6 from which a waveguide 7 communicates with the exhaust pipe. In another preferred embodiment, a reflector 8 is installed in the exhaust pipe in order to direct the air stream or sound even more towards the filter. In order to ensure that the sensitive loudspeaker of the tone generator is not exposed too much to the heat generated in the exhaust pipe in normal operation, the waveguide 7 can be cooled down, for example by means of cooling flanges installed around the waveguide. In order to prevent the reflector 8 from guiding particles into the waveguide 7, the reflector 8 can be provided with cavities or slits close to the attachment of the reflector to the outlet from the waveguide 7 or, depending on the installation of the reflector, to the wall of the exhaust pipe. In this way, particles are able to fall down along the reflector 8, then pass through said slits or cavities, and finally be collected in the collecting vessel. In a preferred embodiment, said reflector is constituted of a valve which is intended to open and close the waveguide 7, wherein an undisturbed flow inside the exhaust pipe 2 is possible in normal operation.

In a preferred embodiment, a collecting vessel 9 for released soot and ash particles is placed in said exhaust pipe 2 upstream and in direct connection with said filter 3. In this respect, "upstream" means inside the exhaust pipe and in a direction towards the combustion engine. When the particles are released from the filter 3, the particles are transported from the filter surface to the collecting vessel. In a preferred embodiment of the invention, in order to allow transport from the filter 3 to the collecting vessel 9, the filter 3 is placed in a portion 10 of said exhaust pipe 2 exhibiting a local direction of extension 11 which forms an angle with the horizontal plane which exceeds 60°. In another preferred embodiment, the local direction of extension extends at between 85° and 90° in relation to the horizontal plane. The measurement is intended to be performed when the exhaust pipe is installed in a condition intended for use and, in case the combustion engine is installed in a vehicle, when the vehicle is placed on level ground. Positioning the filter in said portion will allow particles which have been released from the filter to be transported towards the collecting vessel by the influence of gravity. In order to ensure that the particles fall down into the collecting vessel 9, the vessel is placed in connection with the continuation downstream of the filter of the local direction of extension.

Since the particle generator generates an oscillating air stream, the tone generator will also contribute to transporting the particles away when they have been released from the filter surface. An oscillating air stream does not exhibit any average transport direction when forming a time average for one or several time periods. However, the concentration which prevails at the filter wall when initiating the cleaning process will, in real time very rapidly, gradually be equalized so that the particle concentration, with the exception of effects resulting from the formation of stationary waves in the system, is substantially homogenous within the region where the oscillation takes place. This results in a transport of particles away from the filter surface 3 in a direction towards the collecting vessel 9 by means of the tone generator.

Accordingly, in a preferred embodiment of the invention, the collecting vessel is positioned in such a way that a main portion of the region 12 located downstream of the collecting vessel 9 exhibits a local direction of extension which forms an angle with the horizontal plane which exceeds 60°, and which is preferably is between 85° and 90°.

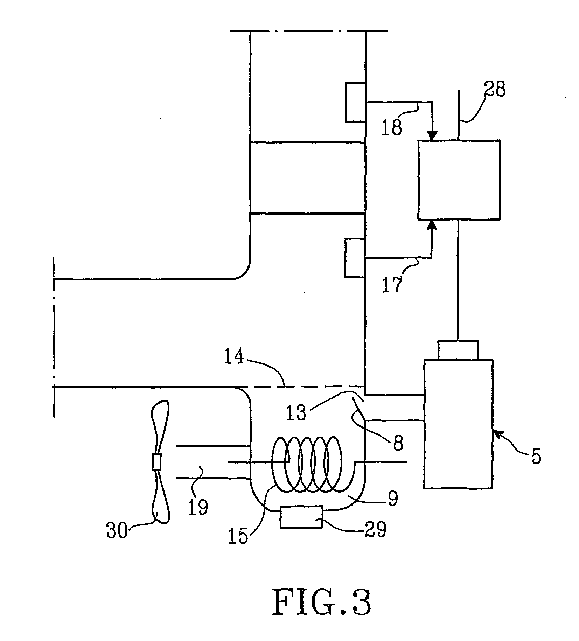

In one embodiment of the invention, as shown in Fig. 3, the outlet 13 from the tone generator 5 is placed in direct connection with the collecting vessel 9 and behind a perforated structure 14, for example a screen, which allows passage of the particles into the vessel. The perforated structure 14 reduces the risk of the exhaust gas flow carrying particles from the collecting vessel 9 in normal operation and thereby returning them to the filter 3. By positioning the outlet 13 from the tone generator behind the perforated structure 14, a more protected location of the tone generator 5 is obtained, as is a smaller influence by the tone generator is obtained in normal operation of the combustion engine.

In one embodiment of the invention, as exemplified in Fig. 3, the transport of released particles away from the filter wall is constituted by an evacuating duct 19, connected to the collecting vessel in which a negative pressure is created by means of e.g. a fan 30.

Preferably, the collecting vessel 9 is provided with a device 15 which provides combustion of the soot particles in the collecting vessel. This device, for example, can be constituted by an electric coil.

Furthermore, Fig. 1 shows a control computer 16, which is intended to control switching-on and switching-off of the tone generator 5 and, whenever applicable, opening and closing of valves 8 arranged to open and close a communicating duct between tone generator 5 and exhaust pipe 2. In one embodiment of the invention, the tone generator is activated as a function of the mileage of a vehicle driven by the combustion engine. In an alternative embodiment, the pressure drop across the filter 3 is measured, for example by means of pressure sensors 17, 18 located upstream and downstream of the filter 3.

Figs. 2a and 2b show the structure of the filter in detail. The filter 3 comprises a membrane which is permeable to gas components generated by a combustion process in the combustion engine, but impermeable to soot and ash particles generated by the same combustion process. The membrane is constituted of a first set of channels 21, each exhibiting an open inlet 22, side walls 23 and a closed end wall 24, and a second set of channels 25, each exhibiting an open outlet 26, side walls 23 and a closed end wall 27, wherein the exhaust gas flow from the combustion engine is intended to be guided from the first set of channels to the second set of channels via said side walls.

Said first set of channels preferably is installed with a local direction of extension 27 which forms an angle with the horizontal plane which exceeds 60°. In another preferred embodiment of the invention, the local direction of extension 27 of the first set of channels forms an angle with the horizontal plane which is between 85° and 90°.

In an alternative embodiment of the invention, the tone generator is constituted solely by a resonance circuit resonated to the desired frequency. In this case, the resonance circuit is driven by means of the exhaust gas flow of the combustion engine. Thereby, the resonance circuit has to be disconnected from the exhaust pipe in normal operation, and has to communicate with the exhaust pipe during the process of cleaning the filter. For this reason, a resonance chamber 6 is connected to the exhaust pipe via a waveguide 7. Furthermore, the exhaust pipe, alternatively the waveguide, exhibits a valve which allows the duct between resonance chamber 6 and exhaust pipe 2 to be closed or opened.

The control unit 16 also comprises an input channel 28 for receiving information about the operational condition of the combustion engine and, whenever applicable, about the vehicle driven by the combustion engine. In one embodiment of the invention, the tone generator is activated only under predetermined operational conditions of the vehicle, preferably, when idling or when the engine is switched off. In order to ensure that the particles are brought from the filter 3 to the collecting vessel 9, it is of importance that the volume flow in the exhaust pipe is not too large. Should an electrical tone generator be utilised, the cleaning process preferably takes place with the engine switched off, and should the tone generator be constituted of a resonance chamber activated by means of the exhaust gas flow, the cleaning process preferably takes place when idling.

Preferably, the cleaning process takes place at an acoustic pressure between 50 and 150 dB.

Furthermore, in a preferred embodiment, the collecting vessel 9 is provided with a service hatch 29 through which ash, and whenever applicable soot particles, are removed. Also the resonance chamber 6 can be provided with such an inspection hatch.

The invention is not limited to the above described embodiments, but may be varied within the scope of the appended claims. For example, the pressure sensors, the evacuating duct and the location of the outlet from the waveguide into the exhaust pipe, mentioned in connection with Figs. 1 and 3, can be freely combined. Furthermore, the tone generator can be placed downstream the particle filter.

## Claims

1. A combustion engine (1) comprising an exhaust pipe (2), and a particle filter (3) located in said exhaust pipe (2) comprising a membrane which is permeable to gas components generated by a combustion process in the combustion engine (1) but impermeable to soot and ash particles generated by the same combustion process and a tone generator (5) is connected to said exhaust pipe (2), wherein the oscillating air stream generated by the tone generator (5) in a cleaning process releases soot and ash particles from said filter (3)
**characterised in that** said tone generator (5) is arranged to generate infrasonic sound.

2. A combustion engine according to claim 1,
**characterised in that** a collecting vessel (9) for released soot and ash particles is arranged in said exhaust pipe (2) upstream and in direct connection with said filter (3).

3. A combustion engine according to claim 1 or 2,
**characterised in that** said membrane and said collecting vessel (9) are placed in said exhaust pipe (2) in such a way that, when a particle is released from the membrane, transport of said particle from the membrane to the collecting vessel (9) is enabled.

4. A combustion engine according to claim 3,
**characterised in that** said membrane is placed in a portion of said exhaust pipe (2) exhibiting a local direction of extension which forms an angle with the horizontal plane which exceeds 60°.

5. A combustion engine according to claim 4,
**characterised in that** the local direction of extension forms an angle with the horizontal plane which is between 85° and 90°.

6. A combustion engine according to any one of the preceding claims,
**characterised in that** the membrane is constituted by a first set of channels (21), each exhibiting an open inlet (22), side walls (23) and a closed end wall (24), and a second set of channels (25), each exhibiting an open outlet (26), side walls (23) and a closed end wall (24), wherein the exhaust gas flow from the combustion engine (1) is intended to be guided from the first set of channels (21) to the second set of channels (25) via said side walls (23), and said first set of channels (21) exhibits a local direction of extension forming an angle with the horizontal plane which exceeds 60°.

7. A combustion engine according to any one of the preceding claims,
**characterised in that** said tone generator (5) is electrically driven.

8. A combustion engine according to any one of the preceding claims,
**characterised in that** said tone generator (5) is constituted by a resonance circuit which is driven by means of the gas flow generated by the combustion engine (1).

9. A method for cleaning a particle filter (3) located in an exhaust pipe(2) belonging to a combustion engine (1), **characterised in that** an oscillating air stream generated by a tone generator (5) releases soot and ash particles from said filter (3) by means of an infrasonic sound.

10. A method according to claim 9,
**characterised in that** the particles released from the particle filter (3) are transported away from the filter (3) to a collecting vessel (9)

11. A method according to claim 10,
**characterised in that** the transport from the particle filter (3) to the collecting vessel (9) primarily takes place by means of the influence of gravity on the particles.

12. A method according to claim 10 or 11,
**characterised in that** the transport from the particle filter (3) to the collecting vessel (9) at least partially takes place by means of the oscillating air stream from the tone generator (5).

13. A method according to any one of claims 9-12,
**characterised in that** said tone generator (5) generates a sound having a frequency below 20 Hz.

14. A method according to any one of claims 9 - 13,
**characterised in that** switching-on and switching-off of the tone generator (5) is controlled by a control computer (16).

15. A method according to claim 14,
**characterised in that** said control computer (16) obtains information about the mileage of a vehicle driven by said combustion engine (1), and that the tone generator (5) is activated at regular intervals with respect to the mileage.

16. A method according to claim 13 or 14,
**characterised in that** the control computer (16) collects information concerning the pressure drop across the filter (3) and that the tone generator (5) is activated when the pressure drop across the filter (3) exceeds a certain threshold value.

17. A method according to any one of claims 14 - 16,
**characterised in that** the tone generator (5) is activated when the combustion engine (1) is idling.

18. A method according to any one of claims 14 - 16,
**characterised in that** the tone generator (5) is activated when the combustion engine (1) is switched off.

## Patentansprüche

1. Brennkraftmaschine (1) mit einem Auspuffrohr (2) und einem Teilchenfilter (3), das sich in dem Auspuffrohr (2) befindet und eine Membran umfasst, die für Gasbestandteile durchlässig ist, die bei einem Verbrennungsvorgang in der Brennkraftmaschine (1) gebildet werden, für Ruß- und Ascheteilchen dagegen undurchlässig ist, die bei dem gleichen Verbrennungsvorgang entstehen, und einem Klangerzeuger (5), der mit dem Auspuffrohr (2) verbunden ist, in welchem der von dem Klangerzeuger (5) in einem Reinigungsvorgang erzeugte schwingende Luftstrom Ruß- und Ascheteilchen aus dem Filter (3) freisetzt,
**dadurch gekennzeichnet, dass** der Klangerzeuger (5) derart ausgebildet ist, dass er Töne im Infraschallbereich erzeugt.

2. Brennkraftmaschine nach Anspruch 1,
**dadurch gekennzeichnet, dass** in dem Auspuffrohr (2) auf der Anströmseite des Filters (3) und in direkter Verbindung mit diesem ein Auffangbehälter (9) zum Sammeln von freigesetzten Ruß- und Ascheteilchen angeordnet ist.

3. Brennkraftmaschine nach Anspruch 1 oder 2,
**dadurch gekennzeichnet, dass** die Membran und der Auffangbehälter (9) in dem Auspuffrohr (2) in der Weise angeordnet sind, dass dann, wenn aus der Membran ein Teilchen freigesetzt wird, die Weiterleitung des Teilchens von der Membran zu dem Auffangbehälter (9) möglich gemacht wird.

4. Brennkraftmaschine nach Anspruch 3,
**dadurch gekennzeichnet, dass** die Membran in einem Teil des Auspuffrohres (2) angeordnet ist, welcher eine örtliche Erstreckung aufweist, die mit der horizontalen Ebene einen Winkel einschließt, der größer als 60° ist.

5. Brennkraftmaschine nach Anspruch 4,
**dadurch gekennzeichnet, dass** die örtliche Erstreckung mit der horizontalen Ebene einen Winkel einschließt, der zwischen 85° und 90° liegt.

6. Brennkraftmaschine nach einem der vorhergehenden Ansprüche,
**dadurch gekennzeichnet, dass** die Membran aus einer ersten Gruppe Kanäle (21) aufgebaut ist, von denen jeder einen offenen Einlass (22), Seitenwandungen (23) und eine geschlossene Abschlusswandung (24) aufweist, sowie aus einer zweiten Gruppe Kanäle (25), von denen jeder einen offenen Auslass (26), Seitenwandungen (23) und eine geschlossene Abschlusswandung (24) aufweist, wobei der Strom von Auspuffgasen aus der Brennkraftmaschine (1) von der ersten Gruppe Kanäle (21) über die Seitenwandungen (23) zu der zweiten Gruppe Kanäle (25) geleitet werden soll, und wobei die erste Gruppe Kanäle (21) eine örtliche Erstreckung besitzt, die mit der horizontalen Ebene einen Winkel einschließt, der größer als 60° ist.

7. Brennkraftmaschine nach einem der vorhergehenden Ansprüche,
**dadurch gekennzeichnet, dass** der Klangerzeuger (5) elektrisch angesteuert ist.

8. Brennkraftmaschine nach einem der vorhergehenden Ansprüche,
**dadurch gekennzeichnet, dass** der Klangerzeuger (5) aus einem Resonanzkreis aufgebaut ist, der mittels des von der Brennkraftmaschine (1) erzeugten Gasstroms angetrieben wird.

9. Verfahren zum Reinigen eines Teilchenfilters (3), das sich in einem zu einer Brennkraftmaschine (1) gehörenden Auspuffrohr (2) befindet,
**dadurch gekennzeichnet, dass** ein von einem Klangerzeuger (5) erzeugter schwingender Luftstrom Ruß- und Ascheteilchen mit Hilfe von Tönen im Infraschallbereich aus dem Filter (3) freisetzt.

10. Verfahren nach Anspruch 9,
**dadurch gekennzeichnet, dass** die aus dem Teilchenfilter (3) freigesetzten Teilchen vom Filter (3) weg zu einem Auffangbehälter (9) geleitet werden.

11. Verfahren nach Anspruch 10,
**dadurch gekennzeichnet, dass** die Weiterleitung von dem Teilchenfilter (3) zu dem Auffangbehälter (9) in erster Linie mittels des Einflusses der Schwerkraft auf die Teilchen erfolgt.

12. Verfahren nach Anspruch 10 oder 11,
**dadurch gekennzeichnet, dass** die Weiterleitung von dem Teilchenfilter (3) zu dem Auffangbehälter (9) zumindest teilweise mittels des schwingenden Luftstroms von dem Klangerzeuger (5) erfolgt.

13. Verfahren nach einem der Ansprüche 9 bis 12,
**dadurch gekennzeichnet, dass** der Klangerzeuger (5) einen Ton mit einer Frequenz von unter 20 Hz erzeugt.

14. Verfahren nach einem der Ansprüche 9 bis 13,
**dadurch gekennzeichnet, dass** das Einschalten und Ausschalten des Klangerzeugers (5) von einem Steuerrechner (16) gesteuert wird.

15. Verfahren nach Anspruch 14,
**dadurch gekennzeichnet, dass** der Steuerrechner (16) Informationen über die zurückgelegten Fahrkilometer bzw. den Kraftstoffverbrauch eines von der Brennkraftmaschine angetriebenen Fahrzeugs erhält, und dass der Klangerzeuger (5) in regelmäßigen Intervallen, bezogen auf die zurückgelegten Fahrkilometer bzw. den Kraftstoffverbrauch, aktiviert wird.

16. Verfahren nach Anspruch 13 oder 14,
**dadurch gekennzeichnet, dass** der Steuerrechner (16) Informationen bezüglich des Druckabfalls am Filter (3) sammelt und dass der Klangerzeuger (5) dann aktiviert wird, wenn der Druckabfall am Filter (3) einen bestimmten Grenzwert übersteigt.

17. Verfahren nach einem der Ansprüche 14 bis 16,
**dadurch gekennzeichnet, dass** der Klangerzeuger (5) aktiviert wird, wenn die Brennkraftmaschine (1) im Leerlauf arbeitet.

18. Verfahren nach einem der Ansprüche 14 bis 16,
**dadurch gekennzeichnet, dass** der Klangerzeuger (5) aktiviert wird, wenn die Brennkraftmaschine (1) ausgeschaltet wird.

## Revendications

1. Moteur à combustion (1) comprenant un tuyau d'échappement (2) et un filtre (3) à particules situé dans ledit tuyau d'échappement (2) comprenant une membrane qui est perméable aux composants gazeux engendrés par un processus de combustion dans le moteur à combustion (1), mais imperméable aux particules de suie et de cendre engendrées par le même processus de combustion, et un générateur (5) de fréquences audio est raccordé audit tuyau d'échappement (2), le flux d'air oscillant engendré par le générateur (5) de fréquences audio dans un processus de nettoyage libérant les particules de suie et de cendre dudit filtre (3), ***caractérisé en ce que*** ledit générateur (5) de fréquences audio est prévu pour engendrer des infrasons.

2. Moteur à combustion selon la revendication 1, ***caractérisé en ce qu'**un* récipient collecteur (9) pour les particules de suie et de cendre libérées est placé dans ledit tuyau d'échappement (2) en amont et en connexion directe avec ledit filtre (3).

3. Moteur à combustion selon la revendication 1 ou 2, ***caractérisé en ce que*** ladite membrane et ledit récipient collecteur (9) sont placés dans ledit tuyau d'échappement (2) de telle façon que, lorsqu'une particule est libérée de la membrane, le transport de ladite particule de la membrane jusqu'au récipient collecteur (9) soit possible.

4. Moteur à combustion selon la revendication 3, ***caractérisé en ce que*** ladite membrane est placée dans une portion dudit tuyau d'échappement (2) présentant une direction locale d'extension qui forme un angle avec le plan horizontal qui excède 60°.

5. Moteur à combustion selon la revendication 4, ***caractérisé en ce que*** la direction locale d'extension forme un angle avec le plan horizontal qui est compris entre 85° et 90°.

6. Moteur à combustion selon l'une quelconque des revendications précédentes, ***caractérisé en ce que*** la membrane est constituée d'un premier jeu de canaux (21) présentant chacun une entrée ouverte (22), des parois latérales (23) et une paroi d'extrémité fermée (24), et d'un deuxième jeu de canaux (25) présentant chacun une sortie ouverte (26), des parois latérales (23) et une paroi d'extrémité fermée (24), dans lequel le flux de gaz d'échappement en provenance du moteur à combustion (1) est prévu pour être guidé du premier jeu de canaux (21) au deuxième jeu de canaux (25) via lesdites parois latérales (23), et ledit premier jeu de canaux (21) présente une direction locale d'extension formant un angle avec le plan horizontal qui excède 60°.

7. Moteur à combustion selon l'une quelconque des revendications précédentes, ***caractérisé en ce que*** ledit générateur (5) de fréquences audio est mû électriquement.

8. Moteur à combustion selon l'une quelconque des revendications précédentes, ***caractérisé en ce que*** ledit générateur (5) de fréquences audio est constitué par un circuit résonant qui est entraîné au moyen du flux de gaz engendré par le moteur à combustion (1).

9. Procédé de nettoyage d'un filtre (3) à particules situé dans un tuyau d'échappement (2) appartenant à un moteur à combustion *(1), **caractérisé en ce qu'**un* courant d'air oscillant engendré par un générateur (5) de fréquences audio libère les particules de suie et de cendres dudit filtre (3) au moyen d'un infrason.

10. Procédé selon la revendication 9, ***caractérisé en ce que*** les particules libérées du filtre (3) à particules sont transportées du filtre (3) jusqu'à un récipient collecteur (9).

11. Procédé selon la revendication 10, ***caractérisé en ce que*** le transport depuis le filtre (3) à particules jusqu'au récipient collecteur (9) se fait principalement sous l'influence de la gravité sur les particules.

12. Procédé selon la revendication 10 ou 11, ***caractérisé en ce que*** le transport depuis le filtre (3) à particules jusqu'au récipient collecteur (9) se fait au moins en partie au moyen du courant d'air oscillant provenant du générateur (5) de fréquences audio.

13. Procédé selon l'une quelconque des revendications 9 à 12, ***caractérisé en ce que*** ledit générateur (5) de fréquences audio génère un son ayant une fréquence inférieure à 20 Hz.

14. Procédé selon l'une quelconque des revendications 9 à 13, ***caractérisé en ce que*** la mise en marche et l'arrêt du générateur (5) de fréquences audio sont contrôlés par un ordinateur de contrôle (16).

15. Procédé selon la revendication 14, ***caractérisé en ce que*** ledit ordinateur de contrôle (16) obtient des informations concernant le kilométrage d'un véhicule mû par ledit moteur à combustion (1), et ***en ce que*** le générateur (5) de fréquences audio est activé à intervalles réguliers en rapport avec le kilométrage.

16. Procédé selon la revendication 13 ou 14, ***caractérisé en ce que*** ledit ordinateur de contrôle (16) recueille des informations concernant la perte de charge dans le filtre (3) et ***en ce que*** le générateur (5) de fréquences audio est activé lorsque la perte de charge dans le filtre (3) excède une certaine valeur de seuil.

17. Procédé selon l'une quelconque des revendications 14 à 16, ***caractérisé en ce que*** le générateur (5) de fréquences audio est activé lorsque le moteur à combustion (1) est au point mort.

18. Procédé selon l'une quelconque des revendications 14 à 16, ***caractérisé en ce que*** le générateur (5) de fréquences audio est activé lorsque le moteur à combustion (1) est arrêté.
